(19) Europäisches Patentamt
European Patent Office
Office européen des brevets

(11) **EP 2 350 606 B1**

(12) **FASCICULE DE BREVET EUROPEEN**

(45) Date de publication et mention de la délivrance du brevet:
**05.06.2019 Bulletin 2019/23**

(21) Numéro de dépôt: **09768111.8**

(22) Date de dépôt: **20.11.2009**

(51) Int Cl.:
*G01N 1/22* (2006.01)          *H01J 49/04* (2006.01)
*G01N 21/39* (2006.01)

(86) Numéro de dépôt international:
**PCT/FR2009/001333**

(87) Numéro de publication internationale:
**WO 2010/058107 (27.05.2010 Gazette 2010/21)**

(54) **DISPOSITIF D'ECHANTILLONNAGE DE GAZ**

GASPROBENAHMEVORRICHTUNG

GAS SAMPLING DEVICE

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **24.11.2008 FR 0806593**

(43) Date de publication de la demande:
**03.08.2011 Bulletin 2011/31**

(73) Titulaire: **Ap2E**
**13793 Aix en Provence Cedex 3 (FR)**

(72) Inventeurs:
• **LONIGRO, Lucien**
  **F-13290 Aix les Milles (FR)**

• **CHOLAT, Pierre**
  **F-13680 Meyrargues (FR)**

(74) Mandataire: **de Roquemaurel, Bruno et al**
**OMNIPAT**
**24 Place des Martyrs de la Résistance**
**13100 Aix en Provence (FR)**

(56) Documents cités:
**EP-A1- 0 194 955          WO-A1-99/57542**
**DD-A3- 277 378          US-A- 5 445 964**
**US-A1- 2005 073 687          US-B1- 6 284 547**

**Description**

La présente invention concerne l'échantillonnage de gaz, et en particulier de gaz industriels, notamment en vue d'effectuer une analyse de leur composition. La présente invention s'applique notamment, à l'analyse de gaz chauds et humides, notamment dans des installations chimiques ou pétrochimiques, des cimenteries, des aciéries, des incinérateurs, ou des installations de traitement ou de production de gaz.

Un dispositif d'échantillonnage comporte généralement une sonde de prélèvement de gaz et une canalisation pour transmettre les échantillons de gaz prélevés vers système d'exploitation des échantillons, tel qu'un analyseur de gaz.

D'une manière générale, l'échantillonnage de gaz en vue de l'analyse de leur composition, constitue une étape clé, en particulier lorsque les gaz à prélever sont chauds et comportent une forte proportion d'eau sous forme de vapeur. Dans ce contexte, il est en effet délicat de réaliser des analyses fiables, et les dispositifs d'échantillonnage actuels nécessitent de fréquentes opérations de maintenance.

En particulier, l'échantillonnage de gaz chauds et humides soulève un problème de condensation. En effet, le point de rosée (dew point), également appelé "température de condensation" de l'eau contenue dans des gaz chauds à teneur en vapeur d'eau élevée peut atteindre plusieurs dizaines voire plusieurs centaines de degrés Celsius. Il en résulte qu'à température ambiante, la vapeur d'eau contenue dans ces gaz risque de se condenser en gouttelettes qui se déposent sur les parois en contact avec les gaz. Si les gaz prélevés comportent des molécules solubles dans l'eau, ces molécules ont tendance à être captées et à se dissoudre dans les gouttelettes. Il en résulte que la composition des gaz qui sont transmis au dispositif d'exploitation ne correspond pas à la composition des gaz prélevés. Le dispositif d'échantillonnage de gaz peut donc influer sur la composition des gaz prélevés et donc sur la qualité des mesures effectuées si le système qui exploite les échantillons de gaz prélevés est un analyseur de gaz. Par ailleurs, les gouttelettes formées sur des parois peuvent entrainer des phénomènes de corrosion, et ce d'autant plus que les gouttelettes peuvent être acides en raison des molécules de gaz qui y sont dissoutes. Le dispositif d'échantillonnage de gaz peut donc également influer sur les coûts et les conditions d'exploitation du système dans lequel il est intégré.

Certains dispositifs d'échantillonnage de gaz sont conçus pour maintenir les gaz prélevés à une température supérieure au point de rosée de la vapeur d'eau contenue dans les gaz prélevés, à la fois dans la sonde et dans la canalisation. Ainsi certains de ces dispositifs sont conçus pour maintenir l'échantillon des gaz prélevés à une température qui peut atteindre une ou deux centaines de degrés Celsius. De tels dispositifs présentent donc un coût de fabrication élevé, en raison notamment de la complexité de la canalisation qui doit être chauffée et de la présence nécessaire de régulateurs de température, des coûts d'exploitation et de maintenance également élevés en raison notamment de l'énergie nécessaire pour maintenir le dispositif à une température relativement élevée. En outre, ces dispositifs impliquent que le système d'exploitation soit également conçu pour fonctionner à la même température.

D'autres dispositifs d'échantillonnage comprennent une sonde chauffée et un dispositif pour assécher l'échantillon gazeux prélevé. Un tel dispositif d'assèchement met en oeuvre des membranes, ou un moyen de refroidissement. Ces dispositifs présentent également des coûts de fabrication et de maintenance élevés en raison de la présence du dispositif de séchage qui peut nécessiter des opérations de maintenance fréquentes avec certains gaz à prélever. En outre ces dispositifs dénaturent l'échantillon prélevé, puisqu'ils en modifient la composition.

D'autres dispositifs d'échantillonnage prévoient de diluer l'échantillon prélevé dans un autre gaz, tel que de l'air dépoussiéré. A cet effet, ces dispositifs comportent une sonde qui n'est pas nécessairement chauffée, un système de Venturi assurant l'aspiration des échantillons de gaz et leur dilution, une canalisation non chauffée et un système fournissant le gaz de dilution sous pression avec un débit élevé. Ces dispositifs présentent également l'inconvénient de dénaturer l'échantillon prélevé puisque sa composition se trouve également modifiée en raison de sa dilution dans un autre gaz, et ce d'autant plus que le gaz de dilution peut en outre apporter des impuretés. Par ailleurs, si le dispositif d'échantillonnage est relié à un dispositif d'analyse, celui-ci doit être très sensible pour pouvoir détecter des composants gazeux en faible quantité en raison de la dilution.

Il est donc souhaitable de pouvoir prélever des échantillons de gaz en s'affranchissant du phénomène de condensation, mais sans les dénaturer ou avoir besoin de les maintenir à une température élevée, de les assécher, ou encore de les diluer.

L' invention est définie par les revendications attenantes.

Les documents EP194955 et US5445964 décrivent un procédé d'échantillonnage selon le préambule de la revendication 1 et un dispositif d'échantillonnage selon le préambule de la revendication 3.

Dans un mode de réalisation, il est prévu un procédé d'échantillonnage de gaz comprenant des étapes de prélèvement de gaz par une sonde, transmission des gaz prélevés à un dispositif d'analyse des gaz prélevés par l'intermédiaire d'une première canalisation, l'abaissement de la pression des gaz prélevés étant effectué en aspirant les gaz prélevés dans la première canalisation par une seconde canalisation en communication avec la première canalisation au travers du dispositif d'analyse, l'abaissement de la pression étant effectué afin de maintenir dans les première et seconde canalisations et dans le dispositif d'analyse une pression apte à maintenir le point de rosée des gaz prélevés à une valeur inférieure à la température des première et seconde canalisations et du dispositif d'analyse.

Selon l'invention, les gaz sont prélevés par une buse de détente calibrée de type sonique, disposée dans la sonde (1), le procédé comprenant des étapes consistant à : chauffer les première et seconde canalisations et le dispositif d'analyse pour atteindre une première température égale au maximum à deux dizaines de degrés Celsius, si la température des première et seconde canalisations et du dispositif d'analyse est inférieure à la première température, et réguler une puissance d'aspiration des gaz prélevés appliquée à la seconde canalisation, pour maintenir constante la pression dans la première canalisation, à une valeur inférieure au tiers de la pression des gaz prélevés en amont de la buse de détente.

Selon un mode de réalisation, le procédé comprend une étape de filtrage des gaz prélevés pour extraire des particules solides susceptibles d'être présentes dans les gaz prélevés, avant abaissement de la pression.

Dans un mode de réalisation, il est également prévu un dispositif d'échantillonnage de gaz comprenant une sonde de prélèvement de gaz, un dispositif d'analyse des gaz prélevés, une première canalisation pour transmettre les gaz prélevés par la sonde au dispositif d'analyse, et un dispositif d'aspiration relié au dispositif d'analyse de gaz par une seconde canalisation, pour aspirer les gaz prélevés dans la première canalisation au travers du dispositif d'analyse, et abaisser la pression des gaz prélevés dans la première canalisation et dans le dispositif d'analyse, l'abaissement de la pression des gaz prélevés étant effectué afin de maintenir dans les première et seconde canalisations et dans le dispositif d'analyse une pression apte à maintenir le point de rosée des gaz prélevés à une valeur inférieure à la température des première et seconde canalisations et du dispositif d'analyse. Selon l'invention, la sonde comprend une buse de détente calibrée de type sonique, le dispositif d'échantillonnage comprenant : des moyens de chauffage pour chauffer les première et seconde canalisations et le dispositif d'analyse pour atteindre une première température égale au maximum à deux dizaines de degrés Celsius, si la température des première et seconde canalisations et du dispositif d'analyse est inférieure à la première température, et des moyens de régulation pour réguler une puissance d'aspiration des gaz prélevés appliquée à la seconde canalisation, pour maintenir constante la pression dans la première canalisation, à une valeur inférieure au tiers de la pression des gaz prélevés en amont de la buse de détente.

Selon un mode de réalisation, la sonde comprend un filtre pour extraire des particules solides susceptibles d'être présentes dans les gaz prélevés, avant abaissement de la pression.

Selon un mode de réalisation, le dispositif d'aspiration comprend une pompe reliée au dispositif d'analyse par la seconde canalisation.

Dans un mode de réalisation, il est également prévu un système d'analyse de gaz, comprenant un dispositif d'échantillonnage de gaz tel que défini précédemment, le dispositif d'analyse étant du type basse pression basé sur une détection par spectrométrie à mesure de décroissance d'énergie dans une cavité résonnante.

Des exemples de réalisation de l'invention seront décrits dans ce qui suit, à titre non limitatif en relation avec les figures jointes dans lesquelles :

La figure 1 représente schématiquement un dispositif d'échantillonnage de gaz selon un exemple ne faisant pas partie de l'invention couplé à un dispositif d'exploitation d'échantillons de gaz,

La figure 2 représente schématiquement un dispositif d'échantillonnage de gaz selon un mode de réalisation, couplé à un dispositif d'exploitation d'échantillons de gaz.

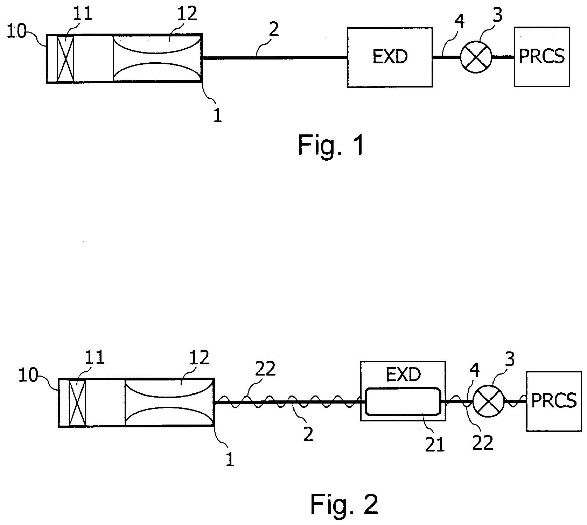

La figure 1 représente un dispositif d'échantillonnage de gaz comprenant une sonde 1 et une canalisation 2 reliant la sonde à un dispositif d'exploitation d'échantillons de gaz EXD. Le dispositif EXD est relié à un dispositif d'aspiration 3 tel qu'une pompe, par une canalisation 4 en communication avec la canalisation 2 au travers du dispositif EXD. Ainsi, le dispositif d'aspiration aspire du gaz prélevé par la sonde 1. Le dispositif d'aspiration 3 est relié à un dispositif de traitement et/ou d'évacuation PRCS des gaz prélevés.

La sonde 1 comprend une entrée de gaz 10, un filtre 11 pour éliminer des particules solides éventuellement présentes dans les gaz pénétrant dans la sonde par l'entrée 10, et une buse de détente 12 telle qu'un tronçon de tube capillaire, recevant les gaz traités par le filtre 11 et dont la sortie est reliée à la canalisation 2. La combinaison du dispositif d'aspiration 3 et de la buse de détente 12 permet d'obtenir dans les canalisations 2, 4 et dans le dispositif EXD une pression, inférieure à la pression des gaz à l'entrée 10 de la sonde 1. Le dispositif d'aspiration peut être associé à des moyens de régulation pour maintenir à une valeur de consigne la pression dans la canalisation 2 et dans le dispositif d'exploitation EXD.

Les caractéristiques de la buse 12 et du dispositif d'aspiration 3 sont choisies pour abaisser la pression des gaz dans les canalisations 2, 4 et dans le dispositif EXD, de manière à abaisser le point de rosée des gaz prélevés par la sonde 1.

La pression dans les canalisations 2, 4 et dans le dispositif EXD est maintenue en dessous d'une valeur telle que la température des canalisations 2, 4 et du dispositif EXD reste supérieure au point de rosée le plus élevé des gaz dans les canalisations 2, 4 et dans le dispositif EXD. Dans les applications visées, les gaz prélevés comportent généralement de la vapeur d'eau et donc le point de rosée le plus élevé des gaz prélevés et celui de l'eau.

Ainsi, les gaz dans les canalisations 2, 4 et dans le dispositif EXD ne peuvent pas se condenser. Il n'est ainsi pas nécessaire de chauffer les canalisations 2, 4 et le dispositif EXD, ou de diluer les gaz, ou encore les assécher. Les gaz prélevés ne sont donc pas dénaturés. Par ailleurs, en raison de leur faible pression par rapport à la pression atmosphérique, les gaz prélevés peuvent circuler rapidement dans les canalisations 2, 4. Il en résulte que les gaz prélevés restent peu en contact avec les canalisations. La sonde 1 et le dispositif de transport des gaz prélevés constitué des canalisations 2, 4 et du dispositif d'aspiration présentent également l'avantage d'être notablement plus simples que ceux de l'art antérieur. Il en résulte que le dispositif d'échantillonnage présente à la fois des coûts de fabrication, d'exploitation et de maintenance notablement plus réduits que les dispositifs d'échantillonnage de l'art antérieur.

La buse 12 est une buse calibrée de type sonique qui assure un débit constant de gaz lorsqu'est réalisée la condition suivante :

$$P1 - P2 > 2\ P2 \qquad\qquad\qquad (1)$$

dans laquelle P1 est la pression des gaz prélevés en amont (compte tenu du sens de circulation des gaz dans la buse), et P2 est la pression des gaz prélevés en aval de la buse. Lorsque la condition (1) est réalisée, la vitesse d'écoulement des gaz au droit de la section minimum de passage des gaz dans la buse atteint la vitesse du son dans ces gaz. En d'autres termes, la condition (1) est réalisée lorsque la pression dans la canalisation 2 est inférieure au tiers de la pression en amont de la buse 12. Par conséquent, tant que la pression dans la canalisation 2 satisfait la condition (1), elle est indépendante de la puissance d'aspiration du dispositif 3.

La puissance d'aspiration du dispositif d'aspiration 3 peut être ajustée afin de toujours satisfaire la condition (1) même si elle subit des variations liées la technologie employée pour réaliser le dispositif d'aspiration, en l'absence de régulation. De cette manière, le débit de gaz dans les canalisations 2, 4 est constant et peut être déterminé avec précision, sans avoir besoin de réguler la puissance d'aspiration. Etant un élément purement statique, la buse 12 présente également l'avantage de ne pas nécessiter d'opérations de maintenance si elle est réalisée dans des matériaux inertes vis-à-vis des gaz susceptibles d'être prélevés par la sonde 1.

Il est à noter que la détente de gaz provoque généralement un refroidissement des gaz prélevés. Si la température des gaz à prélever, c'est-à-dire de la sonde 1 est supérieure à la température ambiante de la canalisation 2 et du dispositif d'exploitation EXD, les gaz refroidis par détente sont réchauffés par la sonde. Ainsi, l'abaissement de température résultant de la détente des gaz est au moins en partie compensé par la température ambiante de la sonde. Si les gaz à prélever sont à la température ambiante de la canalisation 2 et du dispositif d'exploitation EXD, le point de rosée est inférieur à la température ambiante. L'abaissement de pression à réaliser est donc faible, de sorte que l'abaissement de température résultant de la détente des gaz est également faible.

Il peut se produire qu'il ne soit pas possible d'atteindre une pression dans la canalisation suffisamment basse pour éviter la condensation des gaz prélevés, compte tenu de la puissance d'aspiration admissible ou compte tenu d'une pression minimum requise pour l'exploitation des gaz prélevés. Cette situation peut se produire lorsque les gaz à prélever sont très chauds et très humides, de sorte que le point de rosée des gaz est très élevée, et que la température ambiante de la canalisation 2 est basse. Les canalisations 2 et 4 et le dispositif d'exploitation EXD peuvent alors être associés à des moyens tels qu'une isolation thermique, ou de chauffage, pour les maintenir à une température supérieure au point de rosée des gaz prélevés.

Ainsi, la figure 2 représente un dispositif d'échantillonnage qui diffère de celui de la figure 1 en ce que les canalisations 2 et 4 sont équipées de moyens de chauffage 22, et en ce que le dispositif d'exploitation EXD comprend une chambre chauffée 21 dans laquelle circulent les gaz prélevés.

Il convient de préciser que les moyens de chauffage 22 restent sans comparaison avec les moyens de chauffage qui sont nécessaires dans les dispositifs de l'art antérieur transmettant les gaz prélevés à la pression atmosphérique, puisque le point de rosée des gaz prélevés a été abaissée et ce d'une manière qui peut être importante, par la buse 12 combinée au dispositif d'aspiration 3. En effet, dans certaines applications, les moyens de chauffage nécessaires dans l'art antérieur doivent pouvoir porter la canalisation à une température qui peut atteindre deux centaines de degrés Celsius, tandis que les moyens de chauffage 22 qui pourraient être nécessaires dans le dispositif d'échantillonnage de la figure 2 doivent pouvoir porter les canalisations 2, 4 au à une température maximum de une ou deux dizaines de degrés Celsius.

Le dispositif d'exploitation EXD comprend par exemple un dispositif d'analyse de gaz, et/ou un dispositif pour réaliser des mélanges avec d'autres gaz.

Dans un mode de réalisation, le dispositif d'exploitation EXD comprend un analyseur de gaz basse pression basé sur une détection par spectrométrie à mesure de décroissance d'énergie dans une cavité résonnante CRDS (Cavity Ring-Down Spectroscopy). Un tel analyseur est par exemple décrit dans les demandes de brevet WO9957542 (également publiée sous le numéro US 6,504,145), et WO 2003/031949 (également publiée sous le numéro US 7,450,240). Un tel analyseur comprend une cavité optique résonnante dans laquelle circulent les gaz prélevés, une source laser telle qu'une diode laser, fournissant un faisceau laser dont la longueur d'onde est ajustable, qui est envoyé dans la cavité résonnante. La lumière sortant de la cavité résonnante est reçue par un photodétecteur, le signal fourni par le photodétecteur étant analysé par un circuit d'analyse de signal. Le faisceau laser est appliqué à la cavité durant des périodes de durée ajustable, de sorte qu'entre les périodes d'émission du faisceau laser, les photons piégés dans la cavité subissent une décroissance exponentielle en fonction du temps. Si la cavité est vide, ou si la longueur d'onde des photons se trouve en dehors d'une raie d'absorption d'un gaz se trouvant dans la cavité, la décroissance des photons piégés dans la cavité présente une certaine constante de temps dépendant essentiellement de pertes introduites par les miroirs formant la cavité résonnante. Cette constante de temps est réduite si le spectre d'absorption d'un gaz présent dans la cavité comporte une raie d'absorption à la longueur d'onde des photons piégés dans la cavité.

Il apparaîtra clairement à l'homme de l'art que la présente invention est susceptible de diverses variantes de réalisation. En particulier, l'invention n'est pas limitée à un dispositif d'abaissement de la pression comprenant une une pompe d'aspiration.

Ainsi la pompe peut être remplacée par une source de vide, telle que le vide spatial si le dispositif d'échantillonnage est destiné à équiper un engin spatial, ou une source de dépression, par exemple si les gaz à prélever par la sonde sont à une pression supérieure à la pression atmosphérique.

## Revendications

1.  Procédé d'échantillonnage de gaz comprenant des étapes de :

    prélèvement de gaz par une sonde (1) comportant une buse de détente (12),
    transmission des gaz prélevés à un dispositif d'analyse (EXD) des gaz prélevés par l'intermédiaire d'une première canalisation (2),
    abaissement de la pression des gaz prélevés dans la première canalisation et dans le dispositif d'analyse, l'abaissement de la pression des gaz prélevés étant effectué en aspirant les gaz prélevés dans la première canalisation par une seconde canalisation (4) en communication avec la première canalisation au travers du dispositif d'analyse, l'abaissement de la pression des gaz prélevés étant effectué afin de maintenir dans les première et seconde canalisations et dans le dispositif d'analyse une pression apte à maintenir le point de rosée des gaz prélevés à une valeur inférieure à la température des première et seconde canalisations et du dispositif d'analyse,
    **caractérisé en ce que** la buse de détente (12) est une buse calibrée de type sonique, le procédé comprenant des étapes de :

    chauffage des première et seconde canalisations et le dispositif d'analyse pour atteindre une première température égale au maximum à deux dizaines de degrés Celsius, si la température des première et seconde canalisations et du dispositif d'analyse est inférieure à la première température, et
    régulation d'une puissance d'aspiration des gaz prélevés, appliquée à la seconde canalisation, pour maintenir constante la pression dans la première canalisation, à une valeur inférieure au tiers de la pression des gaz prélevés en amont de la buse de détente.

2.  Procédé selon la revendication 1, comprenant une étape de filtrage des gaz prélevés pour extraire des particules solides susceptibles d'être présentes dans les gaz prélevés, avant abaissement de la pression.

3.  Dispositif d'échantillonnage de gaz comprenant :

    une sonde (1) de prélèvement de gaz, comprenant une bus de détente,
    un dispositif d'analyse (EXD) des gaz prélevés,
    une première canalisation (2) pour transmettre les gaz prélevés par la sonde au dispositif d'analyse, et
    un dispositif d'aspiration (3) relié au dispositif d'analyse de gaz par une seconde canalisation (4), pour aspirer les gaz prélevés dans la première canalisation au travers du dispositif d'analyse, et abaisser la pression des gaz prélevés dans la première canalisation (2) et dans le dispositif d'analyse, l'abaissement de la pression des gaz prélevés étant effectué afin de maintenir dans les première et seconde canalisations et dans le dispositif d'analyse une pression apte à maintenir le point de rosée des gaz prélevés à une valeur inférieure à la température des première et seconde canalisations et du dispositif d'analyse,
    **caractérisé en ce que** la buse de détente (12) est une buse calibrée de type sonique, le dispositif d'échantillonnage comprenant :

    des moyens de chauffage pour chauffer les première et seconde canalisations et le dispositif d'analyse pour atteindre une première température égale au maximum à deux dizaines de degrés Celsius, si la température des première et seconde canalisations et du dispositif d'analyse est inférieure à la première température, et

des moyens de régulation pour réguler une puissance d'aspiration des gaz prélevés appliquée à la seconde canalisation, pour maintenir constante la pression dans la première canalisation, à une valeur inférieure au tiers de la pression des gaz prélevés en amont de la buse de détente.

**4.** Dispositif selon la revendication 3, dans lequel la sonde (1) comprend un filtre (11) pour extraire des particules solides susceptibles d'être présentes dans les gaz prélevés, avant abaissement de la pression.

**5.** Dispositif selon la revendication 3 ou 4, comprenant des moyens d'isolation thermique pour maintenir la température de la première canalisation (2), du dispositif d'analyse (EXD) et de la seconde canalisation (4) au dessus du point de rosée des gaz prélevés.

**6.** Dispositif selon l'une des revendications 3 à 5, dans lequel le dispositif d'aspiration comprend une pompe (3) reliée au dispositif d'analyse (EXD) par la canalisation (4).

**7.** Système d'analyse de gaz, **caractérisé en ce qu'**il comprend un dispositif d'échantillonnage de gaz selon l'une des revendications 3 à 6, le dispositif d'analyse de gaz (EXD) étant du type basse pression basé sur une détection par spectrométrie à mesure de décroissance d'énergie dans une cavité résonnante.

## Patentansprüche

**1.** Gasprobenahmeverfahren, umfassend die Schritte:

Entnehmen der Gase mittels einer Sonde (1), die eine Expansionsdüse (12) aufweist,
Übertragen der Gasproben zu einer Gasproben-Analysevorrichtung (EXD) über eine erste Leitung (2),
Absenken des Drucks der Gasproben in der ersten Leitung und in der Analysevorrichtung, wobei das Absenken des Drucks der Gasproben erfolgt, indem die Gasproben aus der ersten Leitung mittels einer zweiten Leitung (4), die mit der ersten Leitung in Verbindung steht, durch die Analysevorrichtung hindurch gesaugt werden, und das Absenken des Drucks der Gasproben erfolgt, um in der ersten und zweiten Leitung und in der Analysevorrichtung einen Druck aufrechtzuerhalten, der sich dafür eignet, den Taupunkt der Gasproben auf einem Wert unterhalb der Temperatur der ersten und zweiten Leitung und der Analysevorrichtung zu halten,
**dadurch gekennzeichnet, dass** die Expansionsdüse (12) eine kalibrierte Düse vom Typ Schalldüse ist und das Verfahren die folgenden Schritte umfasst:

Beheizen der ersten und zweiten Leitung und der Analysevorrichtung, um eine erste Temperatur von höchstens etwa zwanzig Grad Celsius zu erreichen, falls die Temperatur der ersten und zweiten Leitung und der Analysevorrichtung niedriger als die erste Temperatur ist, und
Regulieren, in der zweiten Leitung, der Leistung, mit der die Gasproben angesaugt werden, um den Druck in der ersten Leitung konstant auf einem Wert zu halten, der kleiner als ein Drittel des Drucks der Gasproben stromaufwärts der Expansionsdüse ist.

**2.** Verfahren nach Anspruch 1, umfassend einen Schritt des Filterns der Gasproben, um möglicherweise in den Gasproben vorhandene Feststoffpartikel zu entfernen, bevor die Druckabsenkung erfolgt.

**3.** Gasprobenahmevorrichtung, umfassend:

eine Gasentnahmesonde (1), die eine Expansionsdüse aufweist,
eine Gasproben-Analysevorrichtung (EXD),
eine erste Leitung (2) zum Übertragen der mittels der Sonde entnommenen Gasproben zur Analysevorrichtung, und
eine Saugvorrichtung (3), die über eine zweite Leitung (4) mit der Gasanalysevorrichtung verbunden ist, um die Gasproben aus der ersten Leitung durch die Analysevorrichtung hindurch zu saugen und den Druck der Gasproben in der ersten Leitung (2) und in der Analysevorrichtung abzusenken, wobei das Absenken des Drucks der Gasproben erfolgt, um in der ersten und zweiten Leitung und in der Analysevorrichtung einen Druck aufrechtzuerhalten, der sich dafür eignet, den Taupunkt der Gasproben auf einem Wert unterhalb der Temperatur der ersten und zweiten Leitung und der Analysevorrichtung zu halten,
**dadurch gekennzeichnet, dass** die Expansionsdüse (12) eine kalibrierte Düse vom Typ Schalldüse ist und die Probenahmevorrichtung Folgendes umfasst:

Heizmittel zum Beheizen der ersten und zweiten Leitung und der Analysevorrichtung, um eine erste Temperatur von höchstens etwa zwanzig Grad Celsius zu erreichen, falls die Temperatur der ersten und zweiten Leitung und der Analysevorrichtung niedriger als die erste Temperatur ist, und

Regulierungsmittel zum Regulieren, in der zweiten Leitung, der Leistung, mit der die Gasproben angesaugt werden, um den Druck in der ersten Leitung konstant auf einem Wert zu halten, der kleiner als ein Drittel des Drucks der Gasproben stromaufwärts der Expansionsdüse ist.

4.  Vorrichtung nach Anspruch 3, wobei die Sonde (1) ein Filter (11) umfasst, um möglicherweise in den Gasproben vorhandene Feststoffpartikel zu entfernen, bevor die Druckabsenkung erfolgt.

5.  Vorrichtung nach Anspruch 3 oder 4, Wärmeisolationsmittel umfassend, um die Temperatur der ersten Leitung (2), der Analysevorrichtung (EXD) und der zweiten Leitung (4) über dem Taupunkt der Gasproben zu halten.

6.  Vorrichtung nach einem der Ansprüche 3 bis 5, wobei die Saugvorrichtung eine Pumpe (3) umfasst, die über die Leitung (4) mit der Analysevorrichtung (EXD) verbunden ist.

7.  Gasanalysesystem, **dadurch gekennzeichnet, dass** es eine Gasprobenahmevorrichtung nach einem der Ansprüche 3 bis 6 umfasst, wobei die Gasanalysevorrichtung (EXD) vom Niederdrucktyp, basierend auf einer spektrometrischen Detektion durch Messen der Energieabnahme in einem Resonator (Cavity-ring-down-Spektroskopie) ist.

**Claims**

1.  Method of sampling gases comprising steps of:

sampling gases by a probe (1) having an expansion nozzle (12),
transmitting the sampled gases to a gas sampled analyzing device (EXD) through a first pipe (2),
lowering the pressure of the sampled gases in the first pipe (2) and in the analyzing device, lowering the pressure of the sampled gases being performed by sucking the sampled gases in the first pipe through a second pipe (4) communicating with the first pipe through the analyzing device, lowering the pressure of the sampled gases being performed so as to maintain in the first and second pipes and in the analyzing device a pressure able to maintain the dew point of the sampled gases at a value lower than the temperature of the first and second pipes and of the analyzing device,
**characterized in that** the expansion nozzle (12) is a calibrated nozzle of sonic type, the device comprising steps of
heating the first and second pipes and the analyzing device to reach a first temperature equal to a maximum of two dozens of degrees Celsius, if the temperature of the first and second pipes and of the analyzing device is lower than the first temperature, and
Regulating a suction power of the sampled gases, applied to the second pipe, to maintain the pressure in the first pipe constant, at a value lower than the third of the pressure of the sampled gases upstream from the expansion nozzle.

2.  Method according to claim 1, comprising a step of filtering the sampled gases to extract solid particles susceptible of being present in the sampled gases, before lowering the pressure.

3.  Device for sampling gases comprising: a probe (1) for sampling gases, comprising an expansion nozzle,
an analyzing device (EXD) of the sampled gases,
a first pipe (2) for transmitting the sampled gases through the probe to the analyzing device, and
a suction device (3) connected to the gas analyzing device by a second pipe (4) for sucking the sampled gases in the first pipe (2) through the analyzing device, and lowering the pressure of the sampled gases in the first pipe (2) and in the analyzing device, lowering of the pressure of the sampled gases being performed so as to maintain in the first and second pipes and in the analyzing device a pressure able to maintaining the dew point of the sampled gases at a value lower than the temperature of the first and second pipes and of the analyzing device,
**characterized in that** the expansion nozzle (12) is a calibrated nozzle of sonic type, the sampling device comprising:

heating means for heating the first and second pipes and the analyzing device to reach a first temperature equal to a maximum of two dozens of degrees Celsius, if the temperature of the first and second pipes and of the analyzing device is lower than the first temperature, and

regulation means for regulating a suction power of the sampled gases applied to the second pipe, to maintain the pressure in the first pipe constant, at a value lower than one third of the pressure of the sampled gases upstream from the expansion nozzle.

4. Device according to claim 3, wherein the probe (1) comprises a filter (11) for extracting solid particles susceptible of being present in the sampled gases, before lowering of pressure.

5. Device according to claim 3 or 4, comprising thermal insulating means for maintaining the temperature in the first pipe (2), in the analyzing device (EXD) and in the second pipe (4) above the dew point of the sampled gases.

6. Device according to one of claims 3 to 5, wherein the suction device comprises a pump (3) connected to the analyzing device (EXD) through the pipe (4).

7. Gas analyzing system, **characterized in that** it comprises a gas sampling device according to one of claims 3 to 6, the analyzing device (EXD) being of low pressure type based on cavity ring-down spectroscopy.

Fig. 1

Fig. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 194955 A
- US 5445964 A
- WO 9957542 A
- US 6504145 B
- WO 2003031949 A
- US 7450240 B